# EUROPÄISCHE PATENTSCHRIFT

(11) **EP 0 594 817 B1**
(45) Veröffentlichungstag und Bekanntmachung des Hinweises auf die Patenterteilung: **03.02.1999**
(21) Anmeldenummer: 93909771.3
(22) Anmeldetag: 13.05.1993
(51) Int. Cl.: B62J 1/06, B62K 25/04, B62K 21/20

(54) **FAHRRAD**
BICYCLE
BICYCLETTE

(30) Priorität: 13.05.1992 DE 4215998; 10.07.1992 DE 4223165
(43) Veröffentlichungstag der Anmeldung: 04.05.1994
(73) Patentinhaber: Wolschke, Peter, D-10711 Berlin (DE)
(72) Erfinder: Wolschke, Peter, D-10711 Berlin (DE)
(74) Vertreter: Hengelhaupt, Jürgen, Dipl.-Ing.
(86) Internationale Anmeldenummer: DE9300431
(87) Internationale Veröffentlichungsnummer: WO9323283

(56) Entgegenhaltungen:
- DE-A- 4 123 643
- DE-U- 9 105 745
- DE-U- 9 108 897
- US-A- 5 098 114

## Beschreibung

Die Erfindung bezieht sich auf ein Fahrrad gemäß dem ersten Teils des Anspruchs 1, bei dem während des Fahrens durch Auf- und Abbewegungen z.B. des Sattels Luft gepumpt werden kann.

Ein solches Fahrrad ist durch das GM 91 05 745 bekanntgeworden. Im einzelnen ist aus dieser Schrift bekannt einerseits der allgemeine Gedanke, bei einem Fahrzeug (ganz allgemein) eine Pumpe irgendwo dort vorzusehen, wo ein Stoßdämpfer sitzt, und die Pumpe mit dem Stoßdämpfer zu integrieren. Andererseits ist es aus dieser Schrift bekannt, bei einem Fahrrad eine solche Pumpe unmittelbar unter dem Sattel, d.h. im Sattelstützrohr vorzusehen. Nicht ausdrücklich bekannt ist somit die Vorsehung einer Luftpumpe in einer der Radgabeln eines Fahrrades.

Weiterhin ist aus der DE 41 23 643 ein Fahrrad mit hinten und vorn angeordneten Stoßdämpfern und Federn bekannt, wobei ein vorgegebenes, abgeschlossenes Luftpolster zu- oder abgeschaltet wird. Eine direkte Einstellung verschiedener Federwirkungen ist nicht möglich.
Mit der US 5,098,114 wird ein Fahrrad beschrieben, bei welchem parallel zu einer Luftpumpe ein kompliziert gestaltetes Luftventil angeordnet ist, welches zusammendrückbar ausgebildet ist. Die Federung hier erfolgt primär über das Luftventil.

Der Erfindung liegt die Aufgabe zugrunde, ein Fahrrad gemäß dem Oberbegriff des Anspruches 1 zu schaffen, welches die Anordnung von Luftpumpen an verschiedenen Stellen am Fahrrad gestattet und eine Einstellung der Federeigenschaften auch während der Fahrt erlaubt.

Diese Aufgabe wird erfindungsgemäß durch einen Fahrrad gemäß dem Anspruch 1 gelöst.

Es sei erwähnt, daß eine Vorderradgabel mit Luftfederung bereits bekannt ist (GM 91 08 897) und daß bei dieser Luftfederung der Druck geändert werden kann. Es ist nämlich ein Lufteinlaßventil und ein Druckmeßgerät vorgesehen. Es ist jedoch nicht offenbart, daß man den Druck beim Fahren ändern kann, wie auch nicht durch diese Schrift das Pumpen während der Fahrt durch Auf- und Abbewegungen des Sattels bekanntgeworden ist. Es bleibt vielmehr offen, woher man die Luft nimmt, die in die Vorderradgabel eingelassen werden soll. Ferner ist das offenbarte Ventil ein einfaches Lufteinlaßventil, das eine Regelung in dem Sinne, wie sie erfindungsgemäß erfolgen soll, nicht zuläßt.

Der Anmeldungsvorschlag ist also eine Kombination aus den beiden erwähnten bekannten Fahrrädern mit der Maßgabe, daß neu hinzukommt ein zusätzliches Stellglied, das eine Veränderung des Druckes in der Vorderradgabel und damit der Federeigenschaften der Vorderradgabel ermöglicht, mit der weiteren Maßgabe, daß dieses Stellglied so angeordnet ist, daß es vom Fahrer beim Fahren leicht zugänglich ist.

Der Vorteil des anmeldungsgemäßen Rades gegenüber dem Rad gemäß dem GM 91 05 745 ist der, daß die Vorderradgabel gefedert ist und daß zugleich die Federeigenschaften der Vorderradgabel während der Fahrt geändert werden können.

Der Vorteil des anmeldungsgemäßen Rades gegenüber dem Rad gemäß dem GM 91 08 897 ist der, daß die Federeigenschaften der Vorderradgabel während der Fahrt geändert werden können. Hinzu kommt folgendes: Bei einem Fahrrad, bei dem während der Fahrt nicht ständig Luft in die Vorderradgabel nachgeliefert wird, d.h. bei dem nicht ständig Luft gepumpt wird, werden die Federeigenschaften der Vorderradgabel wegen Undichtigkeiten mit der Zeit nicht mehr vertretbar sein. Das bekannte Rad offenbart also zwar eine Vorderradgabel, die luftgefedert ist, die aber für die Praxis keine Bedeutung hat, weil, wie erwähnt, die Federeigenschaften wegen Undichtigkeiten mit der Zeit sich ungewollt verändern bzw. weil zumindest die Gefahr besteht, daß das eintritt. (Natürlich gilt das nicht, wenn das Luftvolumen völlig eingekapselt ist. Für das vorbekannte Rad trifft das indessen nicht zu.)

Es ist also das erfindungsgemäße Rad, welches erstmalig eine praktisch brauchbare Lösung für ein Fahrrad mit luftgefederter Vorderradgabel darstellen, kann dies durch die Kombination einer luftgefederten Vorderradgabel mit einer während der Fahrt ständig arbeitenden Luftpumpe. Darüber hinaus besitzt das erfindungsgemäße Fahrrad das sonst nirgends offenbarte Stellglied zum Verändern der Federeigenschaften, das nach einem weiteren Merkmal der Erfindung an einer für den Fahrer während der Fahrt leicht zugänglichen Stelle sitzen soll.

Eine Veränderung der Federeigenschaften der Vorderradgabel hat übrigens große praktische Bedeutung: Beim Überfahren eines sehr unebenen Untergrundes würde der Fahrer häufig gern die Feder weicher einstellen. Z.B. tritt dieser Wunsch bei Mountain-Bike-Fahrern bei Bergabfahrten in schwierigem Gelände auf. Kommt der Fahrer anschließend wieder auf ebenes Gelände, z.B. auf eine glatte Straße, dann möchte er die Feder wieder härter einstellen. Diese Variationen läßt das erfindungsgemäße Rad problemlos zu, dies lediglich dadurch, daß das Stellglied entsprechend eingestellt wird.

Wo die Pumpe beim erfindungsgemäßen Rad sitzt, ist grundsätzlich gleichgültig: Sie kann unmittelbar unter dem Sattel sitzen, sie kann aber auch in der Vorderradgabel und/oder in der Hinterradgabel sitzen.

Eine zweckmäßige Weiterentwicklung besteht darin, daß eine Pumpe in einem Ast der Vorderradgabel sitzt.

Weiterhin ist es vorteilhaft, daß die schräg von oben nach unten orientierte Hinterradgabel mit einer Luftfederung ausgerüstet ist, die von einer Pumpe oder zwei Pumpen, und zwar in jedem Ast eine, ständig mit Luft beaufschlagt wird.

Weitere Einzelheiten der Erfindung ergeben sich aus der Zeichnung. Darin zeigen:
Fig. 1 ein Fahrrad der erfindungsgemäßen Art und
Fig. 2 eine Einzelheit, nämlich einen Ast einer Radgabel.

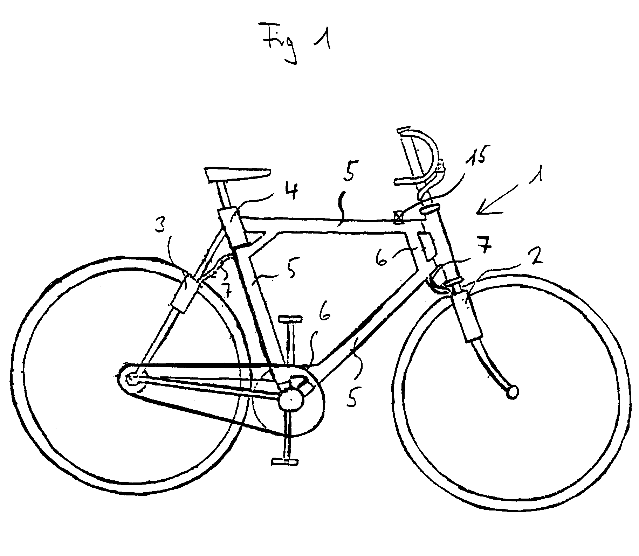

Das in Figur 1 veranschaulichte Fahrrad ist mit 1 bezeichnet. Es hat in seiner Vorderradgabel zwei Luftpumpen 2, in seiner Hinterradgabel zwei Luftpumpen 3 und unter dem Sattel eine Luftpumpe 4. Alle drei Pumpen pumpen durch die Bewegungen, die die Teile zueinander bei der Fahrt machen, Luft in Rohre 5 des Gestells. Diese sind über Rohrstücke 6 miteinander verbunden, so daß das Innere der Rohre 5,6 einen Raum zur Aufnahme von Luft bildet. Die Pumpen 2,3 sind über Schläuche 7 mit den Rohren 5,6 verbunden.

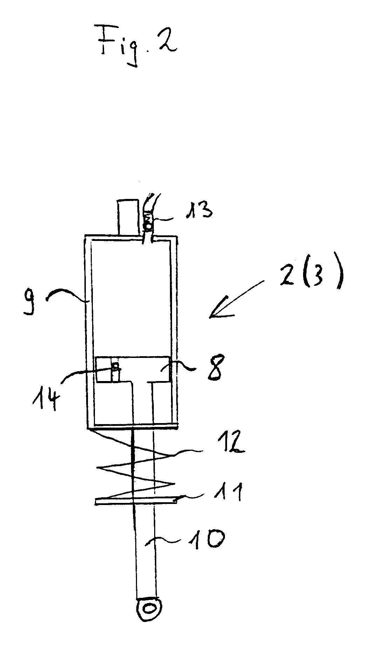

Figur 2 zeigt eine Pumpe 2 bzw. 3 im einzelnen. Sie besteht aus einem Kolben 8 und einem Zylinder 9. Der Zylinder 9 ist oben mit dem Fahrradgestell und unten mit der Radachse verbunden. Der Kolben sitzt an einer Kolbenstange 10. Diese trägt eine Scheibe 11. Zwischen dieser und dem Zylinder 9 befindet sich eine Feder 12. Oben in dem Zylinder sitzt ein Ventil 13, und im Kolben 8 befindet sich ein Ventil 14. Das Ventil 13 öffnet sich, wenn der Kolben 8 nach oben läuft, und schließt sich, wenn der Kolben 8 sich nach unten bewegt. Das Ventil 14 schließt sich bei einer Aufwärtsbewegung des Kolbens 8 und öffnet sich bei einer Abwärtsbewegung des Kolbens 8. Auf diese Weise wird Luft bei den Hin- und Herbwegungen des Kolbens 8 in dem Zylinder 9 in die Rohre 5,6 gepumpt. Zugleich stellt das Gesamtluftvolumen in den Pumpen 2,3,4 und in den Rohren 5,6 eine Luftfeder dar.

Mit 15 (siehe Figur 1) ist ein Stellglied bezeichnet, das ermöglicht, den Druck in dem Luftvolumen einzustellen und damit die Federeigenschaften des Gesamtsystems zu verändern.

## Patentansprüche

1. Fahrrad mit Federung, wobei der Federeffekt durch eine von aus Fahrbahnunebenheiten resultierenden Bewegungen der Fahrradteile zueinander betätigte Luftpumpe realisiert wird,
dadurch gekennzeichnet,
daß an dem Fahrrad (1) in der Vorderradgabel zwei Luftpumpen (2) und/oder in der Hinterradgabel zwei Luftpumpen (3) angeordnet sind und/oder unter dem Sattel eine Luftpumpe (4) angeordnet ist und die Luftpumpen (2, 3, 4) mit den den Fahrradrahmen bildenden Rohren (5, 6) derart verbunden sind, daß durch die Bewegungen, die die Fahrradteile zueinander bei der Fahrt machen, die Luft in die Rohre (5, 6) gepumpt wird und an den Rohren (5, 6) an einer dem Fahrer beim Fahren zugänglichen Stelle ein Stellglied (15) zur Einstellung des Druckes und damit der Federeigenschaften des Gesamtsystems angeordnet ist.

2. Fahrrad nach Anspruch 1,
dadurch gekennzeichnet,
daß die Luftpumpe (2, 3, 4) einen in einem Zylinder (9) mit Ventil (13) angeordneten Kolben (8) mit Ventil (14) aufweist, wobei Ventil (13) sich öffnet, wenn der Kolben (8) nach oben läuft und sich schließt, wenn der Kolben (8) sich nach unten bewegt und Ventil (14) sich bei einer Aufwärtsbewegung des Kolbens (8) schließt und sich bei einer Abwärtsbewegung des Kolbens (8) öffnet, wodurch bei den Hin- und Herbewegungen des Kolbens (8) in dem Zylinder (9) Luft in die Rohre (5, 6) gepumpt wird.

3. Fahrrad nach Anspruch 1 oder 2,
dadurch gekennzeichnet,
daß die Luftpumpe (2, 3, 4) mit einer Feder (12) zusammenwirkt, welche der Dämpfung der Aufwärtsbewegung des Kolbens (8) sowie der Erzeugung einer zusätzlichen Rückstellkraft bei der Abwärtsbewegung des Kolbens (8) dient.

## Claims

1. Bicycle equipped with a spring system, wherein the spring effect is implemented by a pneumatic pump being actuated by movements of the bicycle parts caused by road unevenness,
characterized in
that two pneumatic pumps (2) are arranged in the front wheel fork of the bicycle (1) and/or two pneumatic pumps (3) are arranged in the rear wheel fork and/or one pneumatic pump (4) is arranged under the saddle wherein said pneumatic pumps (2, 3, 4) are connected with the tubes (5, 6) forming the bicycle frame in such a way that the movements carried out by the bicycle parts relative to each other during riding cause air to be pumped into the tubes (5,6) with a control element being mounted on a location within reach of the rider during riding for pressure adjustment in order to control the spring characteristics of the overall system.

2. Bicycle according to patent claim 1,
characterized in
that said pneumatic pump (2, 3, 4) comprises a piston (8) with a valve (14) mounted in a cylinder (9) with a valve (13), wherein said valve (13) opens when said piston (8) moves upward and closes when said piston (8) moves downward and wherein said valve (14) closes when said piston (8) moves upward and opens when said piston (8) moves downward causing air to be pumped by the upward and downward movements of said piston (8) inside said cylinder (9) into said tubes (5,6).

3. Bicycle according to any of patent claims 1 or 2,
characterized in
that said pneumatic pump (2, 3, 4) cooperates with a spring (12) which serves to buffer the upward movement of said piston (8) and to provide an extra restoring force during the downward movement of said piston (8).

## Revendications

1. Vélo à suspension, où l'effet de suspension est réalisé par une pompe à air mise en action par des mouvements réciproques de pièces, produits par les inégalités de la chaussée,
**caractérisé en ce que**
deux pompes à air (2) sont disposées sur la fourche avant du vélo (1) et/ou deux pompes à air (3) sur la fourche arrière et/ou une pompe à air (4) sous la selle, et que les pompes à air (2, 3, 4) sont reliées aux tubes (5, 6) formant le cadre du vélo de sorte que, par les mouvements réciproques des pièces pendant la course, l'air est refoulé dans les tubes (5,6), et en ce qu'un composant de réglage (15) servant au réglage de pression, et par là des qualités de suspension de l'ensemble du système, est disposé sur les tubes (5,6) à un emplacement accessible au cycliste pendant la conduite.

2. Vélo selon revendication 1,
**caractérisé en ce que**
la pompe à air (2, 3, 4) présente un piston (8) à valve (14) disposé dans un cylindre (9) à valve (13), la valve (13) s'ouvrant lorsque le piston (8) se déplace vers le haut et se refermant lorsque le piston (8) redescend, et la valve (14) se refermant lors d'une montée du piston (8), et s'ouvrant lors d'un recul du piston (8), provoquant un refoulement d'air dans les tubes (5,6) lors des mouvements alternés du piston (8) dans le cylindre (9).

3. Vélo selon revendication 1 ou 2,
**caractérisé en ce que**
la pompe à air (2, 3, 4) agit en association avec un ressort (12) servant à l'amortissement des mouvements du piston (8) vers le haut ainsi qu'à la réalisation d'une force de rappel supplémentaire lors de la descente du piston (8).
